Europäisches Patentamt

European Patent Office

Office européen des brevets

(11) Veröffentlichungsnummer : **0 417 570 B1**

## (12) EUROPÄISCHE PATENTSCHRIFT

(45) Veröffentlichungstag der Patentschrift :
**10.02.93 Patentblatt 93/06**

(51) Int. Cl.$^5$ : **C09J 133/10,** // C09J7/02 ,
(C09J133/00, 133:24, 133:14)

(21) Anmeldenummer : **90116745.2**

(22) Anmeldetag : **31.08.90**

(54) **Wässrige Polyacrylat-Dispersion als Heisssiegelkleber.**

(30) Priorität : **14.09.89 DE 3930743**

(43) Veröffentlichungstag der Anmeldung :
**20.03.91 Patentblatt 91/12**

(45) Bekanntmachung des Hinweises auf die
Patenterteilung :
**10.02.93 Patentblatt 93/06**

(84) Benannte Vertragsstaaten :
**AT BE CH DE DK ES FR GB IT LI NL SE**

(56) Entgegenhaltungen :
**DE-A- 2 352 353**
**FR-A- 2 029 778**

(73) Patentinhaber : **RÖHM GMBH**
**Kirschenallee**
**W-6100 Darmstadt (DE)**

(72) Erfinder : **Elser, Wilhelm**
**Am Sportfeld 1**
**W-6103 Griesheim (DE)**
Erfinder : **Rhein, Thomas, Dr.**
**Talstrasse 79**
**W-6501 Stadecken-Elsheim (DE)**
Erfinder : **Süfke, Thomas, Dr.**
**An der Fuchshütte 27**
**W-6101 Rossdorf (DE)**
Erfinder : **Wicke, Michael**
**Im Sandacker 7**
**W-6104 Seeheim-Jugenheim (DE)**
Erfinder : **Jung, Karl-August, Dr.**
**Dresdner Strasse 14**
**W-6105 Ober-Ramstadt (DE)**
Erfinder : **Rossberg, Peter, Dr.**
**Eckweg 1**
**W-6104 Seeheim-Jugenheim (DE)**

## Beschreibung

Zum Verbinden von Substraten, von denen wenigstens eines einen Überzug aus einem schmelzbaren Polymerisat trägt, ist die Technik des Heißsiegelns weit verbreitet. Die Substrate werden bei einer Temperatur und einem Druck zusammengefügt, bei denen die Substrate selbst nicht verformt oder beschädigt werden, aber der Polymerisatüberzug schmilzt und sich mit dem anderen Substrat verbindet. Nach dem Erkalten sind die Substrate auf den erhitzten Flächen miteinander verbunden. Oft wird nur ein Teil der mit dem schmelzbaren Polymerisat überzogenen Fläche des einen Substrats mit dem anderen Substrat in punkt- oder linienförmigen Zonen versiegelt. Beispielsweise wird eine mit einem Heißsiegelkleber beschichtete Aluminiumfolie als Deckel auf den Rand eines Behälters aus einer tiefgezogenen Kunststoffolie gesiegelt.

Als Heißsiegelkleber ist eine Vielzahl von schmelzbaren Polymerisaten im Gebrauch. Sie werden nach einer Reihe von Gesichtspunkten ausgewählt; dazu gehören der erforderliche Abstand ihrer Schmelztemperatur von der der Substrate, die Haftung an den Substraten, die erforderliche Festigkeit der Siegelnaht, die Beschichtungsbedingungen beim Aufbringen des Heißsiegelklebers auf eines der Substrate, bei Lebensmittel- oder Arzneimittelverpackungen die lebensmittelrechtliche bzw. pharmakologische Unbedenklichkeit und die Beständigkeit gegenüber den Inhaltsstoffen heißversiegelter Verpackungen.

## Stand der Technik

Zu den Heißsiegelklebern, die unter Berücksichtigung dieser Gesichtspunkte technische Bedeutung erlangt haben, gehören Polyacrylate. Darunter werden Überwiegend aus Alkylestern der Acryl- und/oder Methacrylsäure mit 1 bis 8 Kohlenstoffatomen im Alkylrest aufgebaute Polymerisate mit Glasübergangstemperaturen im Bereich von etwa 20 bis 100°C und Molekulargewichten zwischen 20 000 und 300 000 (Gewichtsmittelwerte) verstanden. Ein bewährtes Polyacrylat dieser Art ist ein Mischpolymerisat aus Methyl- und Butylmethacrylat. Zu den Vorzügen der Polyacrylate vor anderen Heißsiegelklebern gehört ihre gute Haftung an Substraten aus Kunststoff, insbesondere an solchen auf Basis von Polystyrol. Dazu gehören außer dem Polystyrol selbst auch dessen Mischpolymerisate mit Acrylnitril, Butadien oder Acrylestern und schlagzähe Pfropfmischpolymerisate mit kautschukartigen Polymerisaten als Pfropfgrundlage.

Die Polyacrylate wurden bisher überwiegend aus Lösungen in organischen Lösemitteln auf das heißzusiegelnde Substrat aufgebracht. Diese Beschichtungstechnik macht Maßnahmen zum Schutz vor Feuer und Explosionen sowie zur Rückgewinnung der Lösemitteldämpfe erforderlich. Um diese Maßnahme zu vermeiden, wird versucht, die Polyacrylate in Form wäßriger Dispersionen einzusetzen, die beim Trocknen des Überzugs nur Wasserdampf, jedoch keine feuergefährlichen oder umweltbelastenden Dämpfe abgeben.

Eine andere bekannte Klasse von Heißsiegelklebern sind Polymerisate des Vinylidenchlorids. Sie können nach DE-A 29 06 118 in Form einer wäßrigen Dispersion aufgebracht werden. Um die Haftung auf nicht grundierten Kunststoffund Metallfolien zu verbessern, können sie mit besonderen Verankerungsmitteln versetzt werden. Dazu eignen sich wasserlösliche Polymerisate von funktionell substituierten Acryl- und/oder Methacrylamiden oder deren Copolymerisate mit Acryl- und/oder Methacrylamid, die in der wäßrigen Phase der Dispersion gelöst vorliegen.

Auch Heißsiegelkleber aus Polacrylaten können gemäß der DE-A 27 27 914 (US 4 291 090) und 28 55 147 in Form wäßriger Dispersionen aufgebracht worden. Sie sind oft nicht allein aus Estern der Acryl- und/oder Methacrylsäure aufgebaut, sondern können ein oder mehrere Comonomere enthalten, die beispielsweise zur Einstellung der gewünschten Schmelztemperatur oder der Härte oder der Haftungseigenschaften dienen. Als Comonomere werden unter vielen andern auch Acryl- und Methacrylamid und Aminoalkylester der Acryl- und-/oder Methacrylsäure erwähnt, ohne daß ihnen ein bestimmter Einfluß auf die Polymerisateigenschaften zugeschrieben würde.

## Aufgabe und Lösung

Der Erfindung liegt die Aufgabe zugrunde, die Heißsiegelnahtfestigkeit von Heißsiegelklebern auf Basis von Polyacrylat-Dispersionen, insbesondere die Abzugfestigkeit der Siegelnaht nach längerer Berührung mit Wasser zu verbessern.

Es wurde gefunden, daß dieses Ziel erreicht wird, wenn das Polyacrylat zu wenigstens 70 Gew.-% aus wenigstens einem Alkylester der Methacrylsäure mit 1 bis 4 Kohlenstoffatomen im Alkylrest aufgebaut ist und die Polyacrylat-Dispersion ein polymerisiertes Acrylamid und/oder Methacrylamid und/oder Aminoalkylacrylat oder -methacrylat enthält.

Die Vorteile der Erfindung

werden durch die nachfolgenden Versuchsergebnisse veranschaulicht. Eine genaue Beschreibung der Herstellung und Prüfung der Proben findet sich in den Beispielen am Schluß der Beschreibung.

Eine mit einem PVC-Haftgrund versehene Aluminiumfolie wurde mit einer wäßrigen Dispersion eines Mischpolymerisats aus Methyl- und Butylmethacrylat überzogen und auf Folien aus Polystrol und aus Hart-PVC gesiegelt. Die Abzugfestigkeit der Siegelnaht nach 14- bzw. 28-tägiger Wasserlagerung erwies sich als unzureichend. Wurde jedoch im Sinne der Erfindung die Dispersion mit 2 Gew.-% (bezogen auf den Feststoffanteil der Dispersion) eines wasserlöslichen Mischpolymerisats P aus Acrylamid, Methacrylamid und Hydroxyethylmethacrylat versetzt oder wurde als Polyacrylat ein Mischpolymerisat eingesetzt, an dessen Aufbau neben n-Butyl- und Methylmethacrylat im Gewichtsverhältnis von etwa 4,5 : 1 noch 2 Gew.-% an Acrylamid, Methacrylamid oder Dimethylaminoethylmethacrylat beteiligt sind, so wurde die Abzugfestigkeit nach Wasserlagerung erheblich verbessert:

| Polyacrylat aus Butyl- und Methylmethacrylat (4,5 : 1) Art der Modifizierung (Prozentangaben = Gew.-%) | Abzugsfestigkeit (in N/15 mm) an | | | | | |
|---|---|---|---|---|---|---|
| | Polystyrol | | | Hart-PVC | | |
| | nach 0 | 14 | 28 | 0 | 14 | 28 Tagen |
| | Wasserlagerung | | | | | |
| kein Comonomer, kein Zusatz | 9,1 | 1,1 | 0,9 | 6,5 | 1,3 | 1,6 |
| kein Comon., 2 % Polymerisat P | 10,9 | 11,7 | 11,4 | 5,5 | 7,3 | 7,7 |
| 2 % Acrylamid als Comonomer | 10,2 | 8,6 | 7,8 | 6,8 | 7,2 | 7,8 |
| 2 % Methacrylamid als Comonomer | 8,9 | 9,1 | 9,5 | 8,2 | 6,2 | 6,8 |
| 2 % DMAEMA als Comonomer | 10,9 | 8,5 | 9,4 | 8,4 | 6,8 | 5,9 |
| Vergleichsversuche: | | | | | | |
| 2 % Hydroxyethylmethacrylat als Comonomer | 8,6 | 4,4 | 3,8 | 9,9 | 3,1 | 3,2 |
| Copo. aus 60 % MMA, 38 % BA, 2 % Methacrylamid | 6,0 | 3,7 | 3,9 | 12,9 | 6,5 | 5,7 |

(DMAEMA = Dimethylaminoethylmethacrylat,

MMA = Methylmethacrylat,

BA = Butylacrylat)

Wie die Vergleichsversuche zeigen, lassen sich Acryl- und Methacrylamid durch Hydroxyalkylester, die ebenfalls polare Eigenschaften vermitteln, nicht ersetzen. Die Verbesserung der Heißsiegelnahtfestigkeit nach Wasserlagerung tritt nicht im erforderlichen Ausmaß ein, wenn der Anteil der Methacrylester unter 70 Gew.-% liegt.

Die Wirkung des polymerisierten Acrylamids und/oder Methacrylamids und/oder Aminoalkylacrylats oder -methacrylats läßt sich aus der Kenntnis des Standes der Technik nicht erklären. Überraschend ist vor allem die Tatsache, daß diese Wirkung nicht davon abzuhängen scheint, ob das genannte stickstoffhaltige Monomer als eingebaute Monomereinheit des Polyacrylats oder als wasserlösliches Polymerisat neben dem dispergierten Polyacrylat vorliegt. Bei der Herstellung des Polyacrylats durch Emulsionspolymerisation eines Monomerengemisches aus dem Alkylmethacrylat und dem (Meth)Acrylamid oder dem Aminoalkyl(meth)acrylat ist damit zu rechnen, daß ein Teil dieser stickstoffhaltigen Monomeren in der wäßrigen Phase ein wasserlösliches oder gegebenenfalls dispergiertes Polymerisat bildet und nur der verbleibende Teil als Comonomer Bestandteil des dispergierten Polyacrylats wird. Es wurde nicht geprüft ob und in welchem Umfang sich das polymerisierte stickstoffhaltige Monomer auf diese beiden Polymerisatformen verteilt. Es ist jedoch gesichert, daß der Zusatz des oben erwähnten wasserlöslichen Polymerisats P zu einer Polyacrylatdispersion, die nicht in Anwesenheit von stickstoffhaltigen Monomeren hergestellt worden war, etwa die gleiche Verbesserung zeigt wie die Zugabe solcher Monomerer bei der Emulsionspolymerisation. Die Erfindung schließt daher den Zusatz der polymerisierten Amide oder Aminoester in jeder wirksamen Polymerisatform ein.

Ausführung der Erfindung

Die erfindungsgemäß verwendete Polyacrylat-Dispersion kann in an sich bekannter Weise durch Emulsionspolymerisation in wäßriger Phase in Gegenwart von anionischen, kationischen und/oder nichtionischen Emulgatoren und eines radikalbildenden Intiators hergestellt worden sein. Zu den geeigneten Herstellungsverfahren gehören die Polymerisation einer vorgelegten wäßrigen Monomeremulsion und die sog. Zulaufverfahren, bei denen eine homogene Monomerphase oder eine wäßrige Emulsion der Monomeren unter Polymerisationsbedingungen allmählich nach Maßgabe des Umsatzes zu einer vorgelegten Wasserphase zulaufen gelassen wird. Das dispergierte Polyacrylat hat vorzugsweise eine Teilchengröße im Bereich von 80 bis 500 nm. Die Emulsionspolymerisation in Gegenwart von Reglern ist zweckmäßig, um ein Polymerisat mit einem geeigneten Molekulargewicht zu erhalten, welches die erforderliche Fließfähigkeit im Schmelzzustand gewährleistet.

Als Alkylester der Methacrylsäure sind in den Polyacrylat-Dispersionen der Methyl-, Ethyl-, n-Propyl, Isopropyl-, n-Butyl- oder i-Butylester oder deren Gemische enthalten. Ihr Anteil kann den unteren Grenzwert von 70 Gew.-% deutlich übersteigen und über 90 Gew.-% liegen. In der Regel sind neben den Alkylmethacrylaten und den erfindungswesentlichen stickstoffhaltigen Monomeren keine weiteren Monomeren am Aufbau des Polyacrylats beteiligt, jedoch ist es zur Erzielung besonderer Eigenschaften, z.B. zwecks verbesserter Haftung am metallischen Substraten, durchaus möglich, zusätzliche Monomere einzubauen, sofern sie sich nicht nachteilig auf die erforderlichen Eigenschaften auswirken. Verwendbare Comonomere sind z.B. Alkylacrylate, höhere Alkylmethacrylate, Acryl- und/oder Methacrylsäure oder andere ungesättigte polymerisierbare Mono- oder Dicarbonsäuren, Hydroxyalkylester der Acryl- und /oder Methacrylsäure, Acryl- oder Methacrylnitril, Vinylpyrrolidon, Vinylimidazol, Vinylhalogenide, Vinylester.

Die Auswahl der Monomeren erfolgt in der Weise, daß das entstehende Polyacrylat eine Glasübergangstemperatur von 20 bis 100°C, vorzugsweise 40 bis 80°C hat. Die Mindestfilmbildungstemperatur der Dispersion sollte möglichst nicht über 60°C und vorzugsweise im Bereich von 30 bis 50°C liegen.

Unter den stickstoffhaltigen Monomeren, die erfindungsgemäß in polymerisierter Form vorhanden sind, sind Acryl- und/oder Methacrylamid bevorzugt. Die Wirksamkeit ihrer N-substituierten Derivate ist meist geringer, so daß sie gegebenenfalls in etwas größerer Menge eingesetzt werden sollten. Beispiele verwendbarer Aminoalkyl(meth)acrylate und substituierter (Meth)Acrylamide sind

2-Dimethylamino-ethyl-acrylat und -methacrylat
3-(N,N-Dimethylamino)-propyl-acrylat und -methacrylat,
4-(N,N-Dimethylamino)-butyl-acrylat und -methylacrylat,
Triethanolamin-monoacrylat und -monomethacrylat,
2-(Dimethylaminoethyloxy)-ethyl-acrylat und -methacrylat,
2-Imidazolyl-ethyl-acrylat und -methacrylat,
2-Piperazinyl-ethyl-acrylat und -methacrylat,
(1,2,2,6,6-Pentamethyl-piperidyl-4)-acrylat und -methacrylat,
Morpholino-ethyl-acrylat und -methacrylat,
N,N-Dimethylamino-neopentyl-acrylat und -methacrylat,
2-(N,N-Dibutylamino)-ethyl-acrylat und -methacrylat,
2-Piperazinyl-ethyl-acrylamid und -methacrylamid,
3-(N,N-Dimethylamino)-propyl-acrylamid und -methacrylamid,
N,N-Dimethylamino-neopentyl-acrylamid und -methacrylamid,
3-Morpholino-propyl-acrylamid und -methacrylamid,
2-4-Diethylamino-1-methyl-butyl-acrylamid und -methacrylamid.
Methyl-acrylamidoglycolat-methylether

Der Anteil des polymerisierten Acryl- und/oder Methacrylamids oder des Aminoalkylacrylats und/oder -methacrylats, bezogen auf das Feststoffgewicht des Polyacrylats, beträgt im allgemeinen 0,1 bis 10, vorzugsweise 0,5 bis 5 Gew.-%.

Wenn die Stickstoffhaltigen Monomeren in das Emulsionspolymerisat einpolymerisiert werden sollen, so setzt man sie in dem oben genannten Anteil den übrigen Monomeren, aus denen das Emulsionspolymerisat hergestellt wird, zu. Werden die polymerisierten stickstoffhaltigen Monomeren dagegen in Form eines wasserlöslichen Polymerisats in die wäßrige Phase der Dispersion eingebracht, so muß dieses Polymerisat zunächst für sich hergestellt werden. Dies geschieht am einfachsten dadurch, daß man die stickstoffhaltigen Monomeren in Wasser löst und in der Lösung mit Hilfe eines wasserlöslichen radikalbildenden Initiators die Polymerisation auslöst. Geeignete Polymerisationsverfahren, nach denen z.B. 10-bis 50 %ige wäßrige Polymerlösungen hergestellt werden können, sind allgemein bekannt.

Das wasserlösliche Polymerisat kann allein aus den stickstoffhaltigen Monomeren aufgebaut sein. Vorteilhafte Ergebnisse werden jedoch auch mit wasserlöslichen Mischpolymerisaten von Acryl- und/oder Methacrylamid und/oder Aminoalkylacrylat oder -methacrylat mit einem Hydroxyalkylester der Acryl- und/oder Methacrylsäure erhalten. Der Anteil der stickstoffhaltigen Monomeren beträgt vorzugsweise mehr als die Hälfte, besonders bevorzugt 60 bis 90 Gew.-% des wasserlöslichen Polymerisats. Andere oder weitere Comonomere können an seinem Aufbau beteiligt sein, solange die Wasserlöslichkeit gewährleistet ist. Daher können leicht wasserlösliche Comonomere, wie Acryl- und/oder Methacrylsäure oder N-Vinylpyrrolidon, in dem oben genannten Rahmen in einem höheren Anteil beteiligt sein als nicht oder schwer wasserlösliche Comonomere, wie Alkylester der Acryl- und/oder Methacrylsäure, Acryl- und /oder Methacrylnitril oder Styrol. Das Molekulargewicht des wasserlöslichen Polymerisats ist nicht kritisch und kann beispielsweise im Bereich von 10 000 bis 1 Million liegen. Bevorzugt ist der Bereich von etwa 20 000 bis 200 000. Es ist zweckmäßig, das Polymerisat unmittelbar in Form der wäßrigen Lösung, in der es hergestellt worden ist, zu der Polyacrylat-Dispersion zuzusetzen. Es ist jedoch auch möglich, das Polymerisat in fester Form zu erzeugen und in der wäßrigen Phase der Dispersion zu lösen.

Zur Beschichtung des Substrats wird die Dispersion - je nach der Art des Beschichtungsverfahrens - mit einem Feststoffgehalt von 30 bis 60 Gew.-%, vorzugsweise 40 bis 50 Gew.-% eingesetzt. In der Regel enthält die Beschichtungsmischung außer den für die Emulsionspolymerisation benötigten Hilfsstoffen keine weiteren Zusätze, wenn auch begrenzte Mengen an Verdickungsmitteln oder an Filmbildungshilfsmitteln in besonderen Fällen mitverwendet werden können. Die Beschichtung wird durch Sprühen, Streichen, Gießen, Tauchen, Rakeln, Walzen oder auf andere geeignete Weise in einer solchen Dicke aufgebracht, daß beim Trocknen eine Heißsiegelkleberschicht von etwa 5 bis 20 Mikrometer entsteht. Zum Trocknen wird das beschichtete Substrat in einem Trockenschrank oder in einem kontinuierlich durchlaufenen Trockentunnel - gegebenenfalls bei vermindertem Druck - einer Temperatur zwischen 100 und 200°C ausgesetzt. Die erforderliche Trockenzeit ist um so kürzer je höher die Trocknungstemperatur liegt und beträgt beispielsweise zwischen 5 sec und 5 min. Um verhältnismäßig dicke Heißsiegelkleberüberzüge zu erzeugen, kann das Beschichtungsverfahren mehrfach wiederholt werden, ohne daß die Gefahr besteht, die zuvor gebildete Schicht wieder abzulösen.

Die Polyacrylat-Dispersion wird vorzugsweise auf nichtporöse geschlossene Substrat-Oberflächen aufgebracht, insbesondere auf Folien aus Kunststoff oder Metall. Wird an sehr glatten Folien keine ausreichende Haftung oder keine gleichförmige Benetzung erzielt, so ist es zweckmäßig, einen geeigneten Haftprimer aufzubringen bzw. entsprechende Folien, die mit einem Haftgrund im Handel erhältlich sind, einzusetzen. Beispielsweise werden Aluminiumfolien mit einem Haftgrund auf PVC-Basis versehen und lassen sich dann hervorragend im Sinne der Erfindung beschichten und heißsiegeln.

Das beschichtete Substrat läßt sich erfindungsgemäß auf andere Substrate mit geeigneter Oberflächenbeschaffenheit heißsiegeln. Auch dafür kann ein Haftgrund, der nicht selbst heißsiegelfähig ist, von Vorteil sein, wenn auch normalerweise auf Substrate ohne solchen Haftgrund heißgesiegelt wird. Bevorzugt wird auf Kunststoffolien oder daraus geformte Gebilde gesiegelt. Gute Heißsiegelbarkeit zeigen z.B. Hart-PVC und vor allem Kunststoffe auf Basis von Polystyrol. Zum Heißsiegeln muß in der Beschichtung die Glasübergangstemperatur des Polyacrylats überschritten werden. Die Temperatur der Siegelbacken muß um so höher über der erforderlichen Siegeltemperatur liegen, je kürzer die Kontaktzeit und um so schlechter die Wärmeleitung durch die Substratschicht ist. Dünne Metallfolien haben eine sehr gute Wärmeleitung und lassen eine Temperatur der Siegelbacken zu, die nur wenig über der Schmelztemperatur des Polyacrylats liegt, wenn auch in der Praxis im Interesse einer möglichst schnellen Versiegelung meist deutlich höhere Backentemperaturen, z.B. 120 bis 200°C gewählt werden. Die Glasübergangstemperatur des Kunststoffsubstrats kann der Backentemperatur Grenzen setzen. Um eine Versiegelung hoher Festigkeit zu erriechen, sollte ein Backendruck von mindestens 1, vorzugsweise 3 bis 6 kp/qcm angewendet werden.

BEISPIELE

Nachfolgend wird die Herstellung und Prüfung der Heißsiegelproben beschrieben, deren Festigkeitswerte in der Tabelle im Abschnitt "Vorteile der Erfindung" angegeben ist. Das in der ersten Tabellenzeile verwendete Polyacrylat entspricht dem Beispiel 1 A. Die vier nachfolgenden Proben entsprechen den Beispielen 1 B und 2 bis 4. Die anschließenden Vergleichsversuche beruhen auf den Vergleichbeispielen 1 und 2.

Zur Herstellung der Proben wurde eine 10 gew.-prozentige Lösung eines handelsüblichen Vinylchlorid/Vinylacetat/Maleinsäure-Copolymerisats (Handelsprodukt "Vinylite VMHC", Union Carbide) in Ethylacetate mit einer Spiralrakel in einer solchen Dicke auf eine 40 Mikrometer dicke Weichaluminumfolie aufgetragen, daß nach dem Trocknen in 1 min bei 180°C ein Haftgrund von 2 Mikrometer entstand. Zur Bildung der Heißsiegelkleberschicht wurden die entsprechenden Dispersionen ebenfalls mit einer Rakel aufgetragen und zur Filmbildung sofort in einen auf 180°C vorgeheizten Umlufttrockenschrank eingebracht, bevor das Wasser aus der Dispersionsschicht verdunstet war. Die Rakel war so gewählt worden, daß die getrocknete Heißsiegelkleberschicht eine Dicke von 6 bis 8 Mikrometer hatte.

Die beschichteten Aluminiumfolien wurden mittels eines Labor-Heißsiegelgeräts (Hersteller Brugger) auf einem 1 cm breiten Randstreifen gegen Folien aus Polystyrol bzw. PVC gesiegelt. Die Temperatur der Siegelbacken betrug 180°C, der Siegeldruck 6 kp/qcm, die Siegelzeit 1 sec.

Zur Messung der Siegelnahtfestigkeit gemäß DIN 51221 wurden nach Lagerung bei Normklima (23°C, 50 % rel. Feuchte) 15 mm breit Streifen quer zur Siegelnaht geschnitten, aufgefaltet und in eine Zugprüfmaschine in der Weise eingespannt, daß ein Spannbackenpaar das freie Ende der Alu-Folie, das andere Spannbackenpaar dasjenige der Kunststoffolie hielt und die Siegelnaht von dem gespannten Prüfstreifen etwa rechtwinklig abstand. Als Siegelnahtfestigkeit wird die zum Trennen der Folien auf 15 mm Breite erforderliche Kraft bezeichnet.

Zur Ermittlung der Wasserfestigkeit der Siegelnaht wurden die Probestreifen bei Raumtemperatur 14 bzw. 28 Tage in Wasser gelagert und danach im nassen Zustand ihre Siegelnahtfestigkeit in der oben beschriebenen Wiese gemessen.

Beispiel 1

A) In einem 1 l Rundkolben, mit Rührer und Kontaktthermometer ausgerüstet, wurden 160 Teile vollentsalztes Wasser und 0,05 Teile Natriumdiisooctylsulfosuccinat unter Rühren auf 80 Grad C erhitzt und mit 2,4 Teilen einer 10 Gew.-%igen Ammoniumperoxodisulfatlösung versetzt. Dann wurden bei dieser Temperatur als Emulsion

```
240 Teile vollentsalztes Wasser
  4   "    Natriumdiisooctylsulfosuccinat
  1   "    Ammoniumperoxodisulfat
328   "    Butylmethacrylat
 72   "    Methylmethacrylat
0,4   "    Dodecylmercaptan
```

in 4 Stunden zugetropft. Nach weiteren 2 Stunden bei 80 Grad C wurde auf Raumtemperatur abgekühlt. Es wurde eine stabile, koagulatfreie Dispersion erhalten.

Feststoffgehalt: 50 %
mittlerer Teilchendurchmesser: 320 nm
Viskosität: 40 mPa s
pH: 3,5

B) Zu 196 g der Dispersion wurden unter Rühren 8 g einer 25 %igen wäßrigen Lösung eines Acrylamid/Methacrylamid/Hydroxyethylmethacrylat-Copolymerisats 60 : 10 : 30 Gew.-% zugesetzt.

Beipsiel 2

analog Beispiel 1A wurde eine Dispersion aus folgenden monomeren hergestellt:

320 Teile Butylmethacrylat

72 " Methylmethacrylat

8 " Acrylsäureamid.

Festkörpergehalt: ca. 50%
mittlerer Teilchendurchmesser: 280 nm
Viskosität: 38 mPa s
pH 2,6.

Beispiel 3

analog Beispiel 1A wurde eine Dispersion aus folgenden Monomeren hergestellt:

320 Teile Butylmethacrylat

72 " Methylmethacrylat

8 " Methacrylsäureamid

Festkörpergehalt: ca. 50 %
mittl. Teilchendurchmesser: 340 nm
Viskosität: 40 mPa s
pH: 3,6

Beispiel 4

Es wurden 160 Teile vollentsalztes Wasser und 0,05 Teile Natriumdiisooctylsulfosuccinat auf 80 Grad C erhitzt und mit 5 Teilen einer 10 Gew.-%igen 4,4-Azobis-(4-cyanovaleriansäure)-Na-Salzlösung versetzt. Als Emulsion wurden über ca. 4 Stunden bei 80 Grad C zugetropft:

240 Teile vollentsalztes Wasser

4 " Diisooctylsulfosuccinat

1 " 4,4-Azobis-(4-cyanovaleriansäure)-Na-Salz

320 " Butylmethacrylat

72 " Methylmethacrylat

8 " 2-Dimethylaminoethylmethacrylat

0,4 " Dodecylmercaptan.

Festkörpergehalt: ca. 50 %
mittl. Teilchendurchmesser: 410 nm
Viskosität: 20 mPa s
pH: 8,2

Vergleichsbeispiel 1

analog Beispiel 1A wurde eine Dispersion aus folgenden Monomeren hergestellt:

```
320 Teile Butylmethacrylat
 72    "   Methylmethacrylat
  8    "   2-Hydroxyethylmethacrylat
```

Festkörpergehalt: ca. 50 %
mittl. Teilchendurchmesser: 280 nm
Viskosität: 22 mPa s
pH: 2,2

Vergleichsbeispiel 2

analog Beispiel 1A wurde eine Dispersion aus folgenden Monomeren hergestellt:

```
240 Teile Methylmethacrylat
152    "   Butylacrylat
  8    "   Methacrylsäureamid.
```

Festkörpergehalt: ca. 50 %
mittl. Teilchendurchmesser: 300 nm
Viskosität: 20 mPa s
pH: 3,2.

## Patentansprüche

1. Verwendung einer wäßrigen Polyacrylat-Dispersion als Heißsiegelkleber,
dadurch gekennzeichnet,
daß das Polyacrylat zu wenigstens 70 Gew.-% aus wenigstens einem Alkylester der Methacrylsäure mit 1 bis 4 Kohlenstoffatomen im Alkylrest aufgebaut ist und die Polyacrylat-Dispersion ein polymerisiertes Acrylamid und/oder Methacrylamid und/oder Aminoalkylacrylat oder -methacrylat enthält.

2. Verwendung einer wäßrigen Polyacrylat-Dispersion gemäß Anspruch 1 als Heißsiegelkleber zum Versiegeln einer damit beschichteten Metallfolie mit einem Substrat aus Kunststoff.

3. Verwendung einer wäßrigen Polyacrylat-Dispersion gemäß Anspruch 2, dadurch gekennzeichnet, daß die Metallfolie mit einem Haftgrund versehen ist.

4. Verwendung einer wäßrigen Polyacrylat-Dispersion gemäß einem der Ansprüche 2 oder 3, dadurch gekennzeichnet, daß das Substrat aus einem Kunststoff auf Basis von Polystyrol oder Polyvinylchlorid besteht.

5. Verwendung einer wäßrigen Polyacrylat-Dispersion gemäß einem oder mehreren der Ansprüche 1 bis 4, dadurch gekennzeichnet, daß das polymerisierte Acrylamid und/oder Methacrylamid und/oder Aminoalkylacrylat oder -methacrylat ganz oder überwiegend ein Bestandteil des dispergierten Polyacrylats ist.

6. Verwendung einer wäßrigen Polyacrylat-Dispersion gemäß einem oder mehreren der Ansprüche 1 bis 4, dadurch gekennzeichnet, daß das polymerisierte Acrylamid und/oder Methacrylamid und/oder Aminoalkylacrylat oder -methacrylat ganz oder zum Teil in der wäßrigen Phase der Dispersion gelöst vorliegt.

7. Verwendung einer wäßrigen Polyacrylat-Dispersion gemäß Anspruch 6, dadurch gekennzeichnet, daß das polymerisierte Acryl- und/oder Methacrylamid als wasserlösliches Mischpolymerisat von Acryl- und-/oder Methacrylamid und/oder Aminoalkylacrylat oder -methacrylat mit einem Hydroxyalkylester der Acryl- und/oder Methacrylsäure vorliegt.

## Claims

1. The use of an aqueous polyacrylate dispersion as a heat-sealing glue, characterised in that the polyacrylate is synthesised from at least 70 wt.% of at least an alkyl ester of methacrylic acid having 1 to 4 carbon atoms in the alkyl group and that the polyacrylate dispersion contains a polymerized acrylamide and/or methacrylamide and/or amino alkyl acrylate or methacrylate.

2. The use of an aqueous polyacrylate dispersion, according to claim 1, as a hot-sealing glue for sealing a metal film coated therewith, said metal film having a substrate made of plastics.

3. The use of an aqueous polyacrylate dispersion according to claim 2, characterised in that the metal film is provided with a contact surface.

4. The use of an aqueous polyacrylate dispersion according to either claim 2 or 3, characterised in that the substrate consists of a plastic on the basis of polystyrene or polyvinyl chloride.

5. The use of an aqueous polyacrylate dispersion according to one or more of claims 1 to 4, characterised in that the dispersed polyacrylate component is made up entirely or mainly of polymerized acrylamide and/or methacrylamide and/or amino alkyl acrylate or methacrylate.

6. The use of an aqueous polyacrylate dispersion according to one or more of claims 1 to 4, characterised in that the polymerized acrylamide and/or methacrylamide and/or amino alkyl acrylate or methacrylate is entirely or partly dissolved in the aqueous phase of the dispersion.

7. The use of an aqueous polyacrylate dispersion according to claim 6, characterised in that the polymerized acryl- and/or methacrylamide is present as a water soluble copolymer of acryl- and/or methacrylamide and/or amino alkyl acrylate or methacrylate having a hydroxy alkyl ester of acrylic and/or methacrylic acid.

## Revendications

1. Utilisation d'une dispersion aqueuse de polyacrylate comme colle de thermocollage, caractérisée en ce que le polyacrylate est composé, pour au moins 70% en poids, d'au moins un méthacrylate d'alkyle à 1-4 atomes de carbone dansle reste alkyle, et en ce que la dispersion de polyacrylate contient un acrylamide et /ou un méthacrylamide et/ou un acrylate ou méthacrylate d'aminoalkyle polymérisés.

2. Utilisation d'un dispersion aqueuse de polyacrylate selon la revendication 1 comme colle de thermocollage pour le collage d'une feuille métallique qui en est enduite, sur un substrat en matière plastique.

3. Utilisation d'une dispersion aqueuse de polyacrylate selon la revendication 2, caractérisée en ce que la feuille métallique est garnie d'une couche adhésive.

4. Utilisation d'une dispersion aqueuse de polyacrylate selon la revendication 2 ou 3, caractérisée en ce que le substrat est fait d'une matière plastique à base de polystyrène ou de chlorure de polyvinyle.

5. Utilisation d'une dispersion aqueuse de polyacrylate selon l'une quelconque des revendications 1 à 4, caractérisée en ce que l'acrylamide et/ou le méthacrylamide et/ou l'acrylate ou méthacrylate d'aminoalkyle polymérisés forment entièrement ou essentiellement un constituant du polyacrylate dispersé.

6. Utilisation d'une dispersion aqueuse de polyacrylate selon l'une quelconque des revendications 1 à 4, caractérisée en ce que l'acrylamide et/ou le méthacrylamide et/ou l'acrylate ou méthacrylate d'aminoalkyle polymérisés sont présents entièrement ou en partie en solution dans la phase aqueuse de la dispersion.

7. Utilisation d'une dispersion aqueuse de polyacrylate selon la revendication 6, caractérisée en ce que l'acrylamide et/ou le méthacrylamide polymérisés sont présents sous forme de copolymère hydrosoluble d'acrylamide et/ou de méthacrylamide et/ou d'acrylate ou méthacrylate d'aminoalkyle avec un acrylate et/ou un méthacrylate d'hydroxyalkyle.